# EUROPÄISCHE PATENTANMELDUNG

(11) **EP 1 426 419 A2**
(43) Veröffentlichungstag der Anmeldung: **09.06.2004**
(21) Anmeldenummer: 04005082.5
(22) Anmeldetag: 16.09.1998
(51) Int. Cl.: C09D 4/06, C08F 265/06, C08F 291/00, C08F 257/02

(54) **Thermisch verfilmbare Massen mit einem polymerisierbarem Bestandteil (Reaktivplastisole)**

(30) Priorität: 20.09.1997 DE 19741614; 19.06.1998 DE 19827384
(62) Teilanmeldung aus: 98951411.2
(71) Anmelder: Röhm GmbH & Co. KG, 64293 Darmstadt (DE)
(72) Erfinder: Kerscher, Volker, Dr., 64293 Darmstadt (DE); Süfke, Thomas, Dr., 64390 Erzhausen (DE)

(57) **Zusammenfassung**

Die Erfindung betrifft Reaktiv-Plastisole mit einem reaktiven Monomeranteil, der bei der thermischen Verfilmung polymerisiert wird. Die Plastisole zeichnen sich durch gute mechanische Eigenschaften aus. Als reaktive Monomerkomponente wird ein monofunktionelles (Meth)acrylatmonomer der Formel 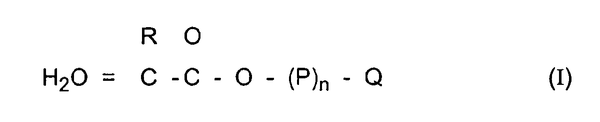 eingesetzt.

## Beschreibung

### Gegenstand der Erfindung

Die Erfindung betrifft sogenannte Reaktivplastisole, d.h. thermisch verfilmbare Polymere die auf Basis von (Meth)acrylaten und/oder Styrol aufgebaut sind, einen niedermolekularen oder oligomeren Weichmacher und einen reaktiven Monomeranteil enthalten.

### Stand der Technik

Plastisole sind Suspensionen oder Dispersionen feinteiliger Polymerpartikel in bestimmten flüssigen organischen Medien, sogenannten Weichmachern. Die in der Weichmacherphase bei Raumtemperatur feindispers verteilten Polymerpartikel bilden bei Raumtemperatur eine Paste. Sie schmelzen aber in einem für die Plastisolverarbeitung typischen "Gelierprozeß" bei Temperaturen von in der Regel > 100 °C, üblicherweise > 150 °C auf und bilden unter Absorption des Weichmachers durch die Polymeren eine einheitliche plastische Matrix.

Typische Vertreter von thermoplastischen feinteiligen Kunststoffen für die Herstellung von Plastisolen sind:
- Polyvinylchlorid (PVC)
- Polymethylmethacrylat (PMMA)
- Polyalkylmethacrylat (PAMA), z.B.
   Polymethylmethacrylatcopolymere
- Polyvinylchlorid-Copolymere (PVC/PVAc)

Plastisole auf PVC-Basis haben aufgrund ihrer günstigen anwendungstechnischen Eigenschaften (mechanische Stabilität, Haftung auf Untergründen usw.) weite Verbreitung, insbesondere auf dem Beschichtungssektor gefunden. (Vgl. Kunststoff-Handbuch, 2. Aufl. Ed. H.K. Felger Bd. 2/2 S. 1077 - 1124; 854 - 869, Hanser-Verlag 1985).

In jüngerer Zeit wurden Plastisole mit vorteilhaften Eigenschaften auch auf Poly(meth)acrylat-Basis als sogenannte PAMA-Plastisole entwickelt (DE-A 24 54 235, US-A 4 071 653; DE-A 40 30 080, US-A 5 120 795).

Als Weichmacher sind Ester der Phthalsäure, Citronensäureester, aber auch oligomere Verbindungen bekannt.

Kennzeichnend für Plastisole ist die Stabilität der auch Weichmacher und Polymer gebildeten Pasten bei Lagertemperatur. Die Norm liegt hier i.a. bei > 30 Tagen. Die thermische Verfilmung wird in der Regel nach dem Aufbringen auf den zu beschichtenden Untergrund durch Erhitzen auf > 150 °C innerhalb weniger Minuten bewirkt.

Es ist weiterhin bekannt, den Plastisolen zur Haftvermittlung auf metallische Untergründen sowie zur Modifikation der Festigkeit und Härte polymerisierbare vernetzende Verbindung wie (Meth)acrylsäureester mehrwertiger Alkohole wie z.B. Trimethylolpropantrimethacrylat zuzusetzen. Die Einsatzmöglichkeiten derartiger Zusätze sind jedoch mengenmäßig begrenzt, da es bei größeren Zusatzmengen, z.B. oberhalb 5 Gew.%, zu einer starken Versprädung der gelierten Beschichtungsmasse kommt.

Der Effekt liegt in der vernetzenden Natur der zugesetzten Verbindungen begründet. Die Polymerisation solcher Zusätze tritt zeitgleich zur physikalischen Gelierung beim Erhitzen durch thermische Polymerisation ein. Die Zerfallscharakteristik der zugesetzten Initiatoren wird dabei der angewendeten Geliertemperatur angepaßt.

DE-PS 25 43 542 (Röhm GmbH) beschreibt ein Verfahren zur Herstellung eines Plastisols durch Emulsionspolymerisation eines monomeren Gemisches aus Methacrylsäuremethylestern, Monomeren mit einem basischem Stickstoffatom und andere damit mischpolymeriserbare Monomeren. Von den erfindungsgemäßen Plastisolen unterscheidet sich die Zusammensetzung durch die Anwesenheit von Monomeren mit einem basischem Stickstoffatom.

US-PS 5,298,542 (Nippon Ceon Coop.) beschreibt Acrylesterplastisol-Zusammensetzungen. Auch hier wird das spezielle Monomer der Erfindung wie es in Komponente (B) beschrieben wird, nicht erwähnt.

US-PS 5,324,762 (ICI) beschreibt ein Plastisol aus Gemischen aus Methylmethacrylat und Isobutylmethacrylatcopolymeren. Weitere Monomerkomponenten wie beispielsweise Isobornylmethacrylat und ihre spezifischen Vorteile werden nicht offenbart.

### Aufgabe und Lösung

Als Nachteil der Plastisole des Standes der Technik sind insbesondere deren mangelnde Härte und Abriebfestigkeit, die unmittelbar mit dem hohen Weichmachergehalt, Richtwert ca. 60 Gew.-%, zusammenhängen, registriert worden. Dieser Nachteil gilt insbesondere auch für Polyalkyl(meth)acrylat-Plastisole. Einer Anhebung des Feststoffgehalts mit dem Ziel, verbesserte mechanische Eigenschaften zu erreichen, steht jedoch die stark erhöhte Viskosität festkörperreicher Plastisole entgegen.

Es bestand daher die Aufgabe, Plastisole mit verbesserten Gebrauchseigenschaften, insbesondere verbesserten mechanischen Eigenschaften und ausreichender Lagerstabilität auf Polyalkyl(meth)acrylat-Basis zur Verfügung zu stellen.

Es wurde nun gefunden, daß die vorliegende Erfindung diese Aufgabe weitgehend löst, insbesondere da sie eine große Variationsbreite bei der Einstellung des Weichmachergehalts und damit der mechanischen Eigenschaften erlaubt, ohne daß ins Gewicht fallende Viskositätsprobleme auftreten. Es ist überraschend, daß trotz des hohen Anteils an reaktiven Monomeren die Lagerstabilität nicht beeinträchtigt wird. Für den Gegenstand der vorliegenden Erfindung wird aus unmittelbar verständlichem Grund der Ausdruck "Reaktivplastisole" vorgeschlagen.

Die Erfindung betrifft somit Reaktivplastisole enthaltend
(A) Thermisch verfilmbare Polymere P als Basispolymer für Plastisole, insbesondere Polystyrol und Polyvinylester, Copolymere oder Poly(meth)acrylsäureester, speziell disperse Poly(meth)acrylsäureester P-M, vorzugsweise in Form eines sprühgetrockneten Emulsionspolymerisats,
(B) einem reaktiven Monomeranteil, bestehend aus mindestens einem monofunktionellen (Meth)acrylatmonomeren RM, insbesondere mit einem Molekulargewicht von > 150 Dalton,
(C) mindestens einen, mit dem thermisch verfilmbaren Polymeren verträglichen niedermolekularen oder oligomeren Weichmacher W
(D) gegebenenfalls weiteren vernetzenden Monomeren VM
(E) gegebenenfalls an sich bekannte Füllstoffe, Pigmente und Hilfsstoffe.

Wie bereits vorstehend beschrieben, sind die thermisch verfilmbaren Polymeren P als Basispolymere für Plastisole an sich bekannt.

Von besonderer Bedeutung ist die vorliegende Erfindung im Hinblick auf die aus Poly(meth)acrylsäureestern P-M gebildeten, sogenannten PAMA-Plastisole. Der Polymeranteil liegt vorzugsweise in disperser Form, insbesondere als sprühgetrocknetes Emulsionspolymerisat vor.

### Komponente (A)

Der hauptsächliche Monomerbestandteil des thermisch verfilmbaren Polymeren P ist das Methylmethacrylat oder Styrol, die in der Regel über 60 Gew.-% insbesondere > 70 und vorzugsweise 80 - 99 Gew.-%, bezogen auf P-M ausmachen.
Bevorzugt ist weiterhin ein Gehalt an polaren Comonomeren in Mengen von 0 - 20 Gew.-%, bezogen auf P-M. Unter polaren Comonomeren seien besonders solche verstanden, die die Heteroatome Stickstoff und/oder Sauerstoff oder - weniger bevorzugt Schwefel - enthalten, insbesondere wenn sie gleichzeitig daran gebundenen Wasserstoff aufweisen.

Vorzugsweise bestehen die polaren Comonomeren aus Verbindungen der Formel II 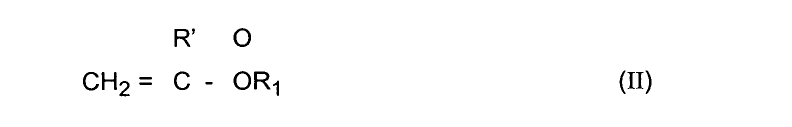 worin
- R': für Wasserstoff oder Methyl und
- R₁: für -OH oder -NHR₂, wobei R₂ Wasserstoff oder einen Alkylrest mit 1 bis 6 Kohlenstoffatomen bedeutet, der auch verzweigt sein kann,
oder einen Hydroxiester -O-R₃-OH, wobei R₃ ein Alkylenrest mit 1 bis 6 Kohlenstoffatomen bedeutet, der auch verzweigt sein kann.
oder werden ausgewählt aus der Gruppe: Maleinsäure, Maleinsäureanhydrid, Furmarsäure oder Itaconsäure.

Genannt seien insbesondere die (Meth)acrylsäure und das (Meth)acrylamid.

Neben Methylmethacrylat und dem polaren Comonomeren können die Poly(meth)acrylsäureester P-M noch von MMA verschiedene Momomere der Formel III 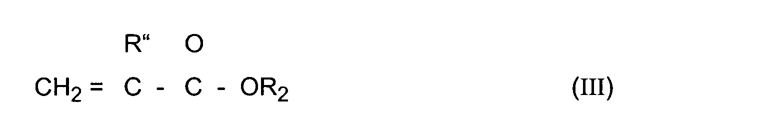 worin
- R": für Wasserstoff oder Methyl und
- R₂: für einen Alkylrest mit 1 bis 10 Kohlenstoffatomen steht, der gegebenenfalls verzweigt sein kann, sowie für einen Cycloalkylrest mit 3 - 7 Ringgliedern steht.

Vorzugsweise handelt es sich bei den Monomeren der Formel III um C4-Alkylester der Acrylsäure oder der Methacrylsäure, z.B. Isobutyl(meth)acrylat oder n-Butyl(meth)acrylat oder um Ethylhexylmethacrylat, Isobornylmethacrylat, Cyclohexylmethacrylat.

Von besonderem Interesse sind Poly(meth)acrylsäureester P-M mit Kern-Schale-Aufbau.

Als Richtwert für den Gehalt der efindungsgemäßen Reaktivplastisole an den thermisch verfilmbaren Polymeren, insbesondere auf PMMA-Basis seien 60 bis 10 Gewichtsprozent, bezogen auf die Gesamtmasse der Komponenten (A) - (E), speziell ca. 40 Gew.-%, angegeben.

Im allgemeinen liegt das Molekulargwicht Mw der Poly(meth)acrylsäurrester P-M im Bereich 20 000 bis 200 000, insbesondere 30 000 bis 150 000 Dalton.

### Komponente (B)

Die die reaktive Monomerkomponente (B) bildenden monofunktionellen (Meth)acrylatmonomeren RM entsprechen vorzugsweise der Formel 1 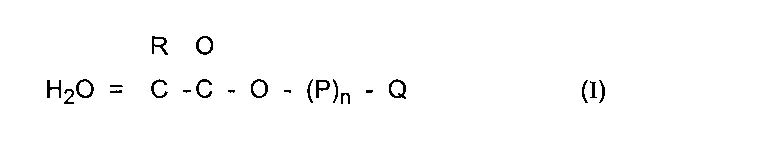 worin
- R: für Wasserstoff oder Methyl und
wobei gilt
- n =: 0,1 bis 20
- P =: Alkylen -(CH₂)m-O-
- m =: 1-6, wobei die Alkylengruppe auch erzweigt sein kann,
- Q =: Alkylresten, mit 1 bis 14 Kohlenstoffatomen, wobei der Alkylrest auch verzweigt sein kann, ferner:
- Cycloalkyl, polycyclischer Alkylrest
- aromatischer Rest, Phenylrest
- substituierte Aromaten
- Aryloxyreste
- Heterozyklus
- Wasserstoff

Genannt seien insbesondere Isobornylmethacrylat, Ethylhexylmethacrylat, Dicyclopentadienyloxyethylmethacrylat, Benzylmethacrylat, Hydroxyethylmethacrylat, Hydroxypropylmethacrylat, 2-Cyclohexyliden-4-methacryloyloxy-methyl-1,3-dioxolan, 2,2-Dimethyl-4-methacryloyloxy-methyl-1,3-dioxolan; 2,2-Dimethyl-5-ethyl-5-methacryloxy-methyl-1,3-dioxan, 5-Methacryloyloxymethyl-5-methyl-1,3-dioxan, 2-Phenyl-1,3-dioxolan-4-yl-methylmethacrylat, Phenylethylmethacrylat, Phenoxyehtylmethacrylat, Ethyltriglycolmethacrylat, Furfurylmethacrylat, Tetrahydrofurfurylmethacrylat (Vgl. US 2.680.735; BE-A 521 281)

Dem Anteil der reaktiven Monomeren (B) entsprechend setzt man den Formulierungen zweckmäßigerweise Radikal-Initiatoren, wie die bereits für die Herstellung der Poly(meth)acrylsäureester P-M beschriebenen, in Mengen von etwa 0,5 Gew.-%, bezogen auf die reaktiven Monomeren (B) zu.

Desweiteren können die erfindungsgemäßen Reaktivplastisole noch als weitere vernetzende Monomerkomponente (D) an sich bekannte Vernetzer in Mengen von 0 bis 20 Gew.-% vorzugsweise 0,1 bis 10 Gew.-%, bezogen auf die thermisch verfilmbaren Polymeren P, enthalten. Solche vernetzende Monomere enthalten mehrere radikalisch polymerisierbare Einheiten in gleichem Molekül, wie beispielsweise (Meth)acrylsäureester mehrwertiger Alkohole.
Genannt seine z.B. Trimethylolpropan-tri(meth)acrylat, 1,4-Butandioldimethacrylat, 1,3-Butandioldimethacrylat, 1,6-Hexandioldimethacrylat.

Die Komponente (A) und (B) stehen in der Regel im Gewichtsverhältnis 5 zu 1 bis 1 zu 5.

Die Herstellung von dispersem Poly(meth)acrylsäureestern P-M durch Sprühtrocknung von Polymerdispersionen ist an sich bekannt (vgl. H. Rauch-Puntigam, Th. Völker, Acryl- und Methacrylverbindungen loc. cit. S. 217 - 299; Kirk-Othmer, 3^{rd} Ed. Vol. 1, loc. cit. pg. 397 - 400; EP-B 0 294 663). Man arbeitet in an sich bekannter Weise, wobei neben den Monomeren als Medium (vorzugsweise destilliertes) Wasser, ein wasserlöslicher Initiator und ein Emulgator zur Anwendung kommen.

Als Emulgatoren kommen ebenfalls die üblichen mit einem HLB-Wert über 12, insbesondere anionische Emulgatoren, wie z.B. die Salze langkettiger Paraffinsulfonsäure infrage.

Bei einer bevorzugten Ausführungsform verfährt man so, daß man zu einer wäßrigen Vorlage mit Initiator/Emulgator bei erhöhter Temperatur, beispielsweise ca. 80 °C, eine wäßrige Emulsion der Monomeren mit Initiator unter Rühren innerhalb einer gewissen Zeit, beispielsweise 1 ½ (± ½) Stunde zutropfen läßt und zur Vervollständigung der Polymerisation noch etwa über den gleichen Zeitraum bei erhöhter Temperatur hält. Nach dem Abkühlen kann der Reaktionsansatz sprühgetrocknet werden.

Als Initiator haben sich anorganische Peroxide wie Kalium- oder Ammoniumperoxidisulfat in Mengen von 0,001 bis 0,2 Gew.-%, bezogen auf die Monomeren bewährt. Auch Redoxsysteme bestehend aus einer Peroxidkomponente und einer reduzierenden Komponente wie z.B. einem reduzierenden Salz einer Schwefel-Sauerstoffsäure lassen sich verwenden.

Zur Herstellung der Polymerisate P-M kann das Molekulargewicht durch Zusatz von Reglern, gewöhnlich von Schwefelreglern, insbesondere von Alkylmercaptanen wie z.B. Dodecylmercaptan, Laurylmercaptan in Mengen von gewöhnlich ca. 0,05 bis 0,5 Gew.-%, bezogen auf die Monomeren geregelt werden. Das Molgewicht liegt im allgemeinen im Bereich 20 000 - 200 000 Dalton.

Auch die Sprühtrocknung kann in bekannter Weise erfolgen. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder bevorzugt mittels einer schnell rotierenden Lochscheibe zertstäumt. Die eintretende Heißluft hat eine Temperatur von 100 °C bis 250 °C, vorzugsweise von 150 °C - 250 °C.

Für die Eigenschaften des sprühgetrockneten Emulsionspolymerisats ist die Austrittstemperatur der Luft entscheidend, d.h. die Temperatur, bei der die getrockneten Pulverkörnchen am Fuß des Sprühturms oder in einem Zyklonabscheider von dem Luftstrom getrennt werden. Diese Temperatur soll möglichst unter der Temperatur liegen, bei der das Emulsionspolymerisat sintern oder schmelzen würde. In vielen Fällen ist eine Austrittstemperatur von 50 °C - 90 °C gut geeignet.

Die Austrittstemperatur läßt sich bei konstantem Luftstrom durch Variation der kontinuierlich je Zeiteinheit eingesprühten Dispersionsmenge regeln.

Die durch Sprühtrocknung der Polymerdispersion gewonnen Polymerisate P-M weisen eine Primärteilchengröße im Bereich 0,1 bis 5 µm auf. (Bestimmung nach Ullmanns Encyclopädie der techn. Chemie 4. Auflage Bd. 5, S. 725 - 752). Die Korngrößenverteilung kann durch Messung der Lichtextinktion einer durch die Meßzelle eines Meßgeräts ("Kratel Partoskop F" er Kratel GmbH, Göttigen) strömenden Suspension der Teilchen in Wasser bestimmt werden. Eine sekundär erfolgende Aggregation der Primärteilchen kann zu Agglomeraten im Größenbereich 5 - 100 µm führen, die aber gleichfalls im Sinne der vorliegenden Erfindung verwendbar sind.

### Komponente (C)

Als Weichmacher W der Kategorie (C) kommen an sich bekannte Weichmacher infrage, wie z.B. die Alkylester der Phthalsäure, der Adipinsäure, der Sebacinsäure, chlorierte Paraffine, Trialkylphosphate, aliphatische oder araliphatische Polyester neben Weichmachern mit mittlerer Polarität wie höhere Polyglykole, Phthalsäurepolyester oder Adipinsäurepolyester u. v. a. Als ein Hinweis kann gelten, daß in der

Regel auch alle für PVC geeigneten Weichmacher eingesetzt werden können, wobei die Gruppe der Phthalat-Weichmacher wegen ihrer herausragenden technischen Bedeutung besonders hervorzuheben ist. Eine ausführliche Beschreibung geeigneter Weichmacher findet sich im Kunststoff-Handbuch Herausg. H.K. Felger Bd. 1/1 C, Hanser Verlag 1985 sowie in H.F. Mark et al. Encyclopedia of Polymer Science and Engineering, Supplemental Volume pg. 568 - 647, J. Wiley 1989. Eine Auswahl geeigneter Weichmacher kann auch der DE-C 25 43 542 entnommen werden.

Besonders erwähnt seien das Benzyl-octylphthalat, weiter Diisodecylphthalat, Dioctylphthalat.
Die Weichmacher W kommen in der Regel in Anteilen von 5 bis 200 Gew.-Teilen, auf 100 Gew.-Teile der thermisch verfilmbaren Polymeren P zur Anwendung. Das Verhältnis zwischen Weichmacher W und den Monomeren der Komponente (B) läßt sich praktisch beliebig einstellen.

Bereits durch einen Anteil der Monomer-Komponente (B) von 10 Gew.-% erhält man im allgemeinen verbesserte Produkteigenschaften. Eine übliche Rezeptur enthält beispielsweise 10 Gew.-Teile Monomeranteile (B) [inclusive 0,5 Gew.-% Initiator bezogen auf den Gehalt (B)] ca. 40 Gew.-Teile thermisch verfilmbare Polymere P, 50 Gew.-Teile Weichmacher W.

Die erhaltenen erfindungsgemäßen Plastisole weisen sehr gute Gebrauchseigenschaften auf. Hervorzuheben ist z.B. ihre Zugfestigkeit und die Blockfestigkeit der Produkte. Topfzeiten von mehr als 30 Tagen sind gewährleistet. Vergleichsprodukte mit einem Gehalt von 40 Gew.-% Polymer und 60 Gew.-% Weichmacher weisen eine sehr geringe Zugfestigkeit und eine klebrige Oberfläche auf.
Das Verhältnis zwischen Weichmacher und Komponente (C) läßt sich beliebig einstellen.

### Komponente (E)

Die Reaktivplastisole können anwendungsbedingt noch an sich bekannte Hilfsstoffe wie Haftvermittler, Netzmittel, Verlaufsmittel, Treibmittel in Anteilen von 0 bis 5 Gew.-% (bezogen auf die Reaktivplastisole) enthalten. (Vgl. Ullmann's Encyclopedia of Industrial Chemistry 5^{th} Ed. Vol. A21, pg. 734 - 737 VCH 1992).

### Herstellung von Plastisolen

Prinzipiell kann die Mischung der Komponenten für die erfindungsgmäßen Reaktivplastisole mit verschiedenartigen Mischern vorgenommen werden. Im Einklang mit den Erfahrungen bei PVC- und PAMA-Plastisolen werden jedoch langsam laufende Planeten-Rührwerke, Hochgeschwindigkeits-Mischer bzw. Dissolver, Horizontal-Turbomischer und Dreiwalzenwerke bevorzugt; wobei die Wahl von der Viskosität der erzeugten Plastisole beeinflußt wird. (Vgl. H.F. Mark et al., Encyclopedia of Polymer Science and Engineering 2^{nd} Ed. Vol. 17, 365 - 866 J. Wiley 1989). Gemischt wird, bis Homogenisierung der Masse eingetreten ist.

Die Masse kann in Schichtstärken von 1 - 5 mm in Falle von PAMA-Plastisolen vorzugsweise bei Temperaturen von 100 - 200 °C, im allgemeinen innerhalb von 30 bis 2 Minuten geliert werden. Man erhält in der Regel eine transparente flexible Folie.

### Anwendung der Plastisole

Die gemäß der vorliegenden Erfindung erhältliche Reaktivplastisole sind für vielerlei Anwendungen geeignet, wie sie beispielsweise durch die Anwendungsbereiche für PVC- und PAMA-Plastisole vorgezeichnet sind: Textilbeschichtung, flexible Bodenbeläge, Unterbodenschutz, Punktschweißpasten.

### Vorteilhafte Wirkungen

Durch den Einbau von polaren Comonomeren gemäß der Formel (II) in die Polymeren nach (A) z.B. auch im Zuge einer Kern-Schale-Polymerisation, wird das Anquellen der Polymeren durch die reaktiven Monomeren der Gruppe (B) unterbunden.

Die Komponente (B) weist insbesondere folgende Vorzüge auf:

In Abwesenheit von Weichmacher weisen die Monomere nach (B) in polymerisiertem Zustand in der Regel eine gute Verträglichkeit mit den Polymeren nach (A) auf.

Die Monomeren nach (B) haben einen sehr hohen Siedepunkt und weisen praktisch keinen nennenswerten Geruch auf.

Die folgenden Ausführungsbeispiele dienen zur Erläuterung der Erfindung.

### AUSFÜHRUNGSBEISPIELE

### a) Herstellung der Reaktivplastisole

### Komponente (A)

20 g sprühgetrocknetes Emulsionspolymerisat werden in einem Gefäß eingewogen. Das Emulsionspolymerisat hat einen Kern-Schale-Aufbau mit einem Kern (Massenanteil: 75 %) zu 100 % aufgebaut aus MMA und einer Schale (Massenanteil: 25 %) aufgebaut aus 92 % MMA und 8 % Methacrylamid.

### Komponente (B) + (C)

| | | |
|---|---|---|
| Ansatz 1 | 20,00 g | Benzyloctylphthalat |
| | 10,00 g | 2-Cyclohexyliden-4-methacryloyloxymethyl-1,3-dioxolan |
| | 0,05 g | t-Butyl-perbenzoat |
| | | |
| Ansatz 2 | 25,00 g | Benzyloctylphthalat |
| | 5,00 g | 2-Cyclohexyliden-4-methacryloyloxymethyl-1,3-dioxolan |
| | 0,05 g | t-Butyl-perbenzoat |

Komponente (A) wird mit den flüssigen Ansätzen 1 bzw 2 vermischt und mit Hilfe eines Holzspatels für 2 Minuten kräftig gerührt.

Die Viskosität der so erhaltenen visuell homogenen Paste erhöht sich innerhalb von 24 h geringfügig. Das dann erreichte Niveau einer fließfähigen mittelviskosien Paste bleibt bei Lagerung unter Raumtemperaturbedingungen für mindestens 30 Tage erhalten.

### b) Verfilmung der Reaktivplastisole

Die Pasten werden sowohl auf Glasplatten in einer Schichtdicke von ca. 1,5 mm als auch in Aluminiumschalen bis zu einer Schichtdicke von ca. 5 mm ausgegossen. Die Verfilmung erfolgt innerhalb von 20 Minuten bei 130 °C.

### Ergebnisse

Das gelierte Plastisol nach (A) plus Ansatz 1 ist relativ steif und zähelastisch sowie absolut klebfrei.

Die Mischung (A) plus Ansatz 2 ergibt ein ebenfalls klebfreies, etwas weicheres und nahezu gummielastisches Material mit ebenfalls hervorragender Festigkeit.

Ein Vergleichsversuch auf Basis A plus reinem Weichmacher [ohne Komponente (B)] ergibt ein extrem weiches und klebriges Gel mit nur geringer Festigkeit.

## Patentansprüche

1. Reaktivplastisole enthaltend
(A) an sich bekannte, thermisch verfilmbare Polymere P als Basispolymer für Plastisole
(B) einen reaktiven Monomeranteil bestehend aus mindestens einem monofunktionellen (Meth)acrylatmonomeren RM,
(C) mindestens einen, mit dem thermisch verfilmbaren Polymeren P verträglichen niedermolekularen oder oligomeren Weichmacher W
(D) gegebenenfalls weitere, vernetzende Monomeren VM
(E) gegebenenfalls an sich bekannte Füllstoffe, Pigmente und Hilfsstoffe.

2. Reaktivplastisole enthaltend
(A) an sich bekannte, thermisch verfilmbare Polymere P als Basispolymer für Plastisole
(B) einen reaktiven Monomeranteil bestehend aus mindestens einem monofunktionellen (Meth)acrylatmonomeren RM,
(C) mindestens einen, mit dem thermisch verfilmbaren Polymeren P verträglichen niedermolekularen oder oligomeren Weichmacher W
(D) weitere, vernetzende Monomeren VM
(E) an sich bekannte Füllstoffe, Pigmente und Hilfsstoffe.

3. Reaktivplastisole gemäß Anspruch 1, **dadurch gekennzeichnet, daß** die thermisch verfilmbaren Polymeren P aus Poly(meth)acrylsäureestern P-M auf Basis von Polymethylmethacrylat bestehen.

4. Reaktivplastisole gemäß Anspruch 3, **dadurch gekennzeichnet, daß** die Poly(meth)acrylsäureester in Form von sprühgetrockneten Emulsionspolymerisaten eingesetzt wurden.

5. Reaktivplastisole gemäß Anspruch 1, **dadurch gekennzeichnet, daß** die thermisch verfilmbaren Polymeren P aus Polystyrol oder Polystyrolcopolymeren bestehen.

6. Reaktivplastisole gemäß Anspruch 5, **dadurch gekennzeichnet, daß** Polystyrol oder Polystyrolcopolymere in Form von sprühgetrockneten Emulsionspolymerisaten eingesetzt werden.

7. Reaktivplastisole gemäß den Ansprüchen 1 bis 6, **dadurch gekennzeichnet, daß** die Poly(meth)acrylsäureester P-M oder die Styrolcopolymeren einen Gehalt von 0-20 Gew.-%, bezogen auf P-M, an polaren Comonomeren besitzen.

8. Reaktivplastisole gemäß Anspruch 7, **dadurch gekennzeichnet, daß** die polaren Comonomeren ausgewählt sind aus der Gruppe bestehend aus (Meth)acrylsäure oder (Meth)acrylamid, Maleinsäure, Maleinsäureanhydrid, Fumarsäure, Itaconsäure.

9. Reaktivplastisole gemäß den Ansprüchen 1 bis 7, **dadurch gekennzeichnet, daß** die Komponente (A) und (B) im Gewichtsverhältnis 1 zu 20 bis 20 zu 1 stehen.

10. Reaktivplastisole gemäß den Ansprüchen 1 bis 9, **dadurch gekennzeichnet, daß** die die reaktiven Monomerkomponenten (B) bildenden monofunktionellen (Meth)acrylatmonomeren RM der Formel I 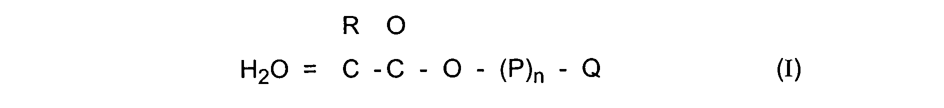 worin
R für Wasserstoff oder Methyl und
wobei gilt
n = 0,1 bis 20
P = Alkylen -(CH₂)m-O-
m = 1-6, wobei die Alkylengruppe auch erzweigt sein kann,
Q = Alkylresten, mit 1 bis 14 Kohlenstoffatomen, wobei der Alkylrest auch verzweigt sein kann, ferner:
- Cycloalkyl, polycyclischer Alkylrest
- aromatischer Rest, Phenylrest
- substituierte Aromaten
- Aryloxyreste
- Heterozyklus
- Wasserstoff
entsprechen.

11. Reaktivplastisole gemäß den Ansprüchen 1 bis 10, **dadurch gekennzeichnet, daß** die vernetzenden Monomeren VM in Anteilen von 0,1 bis 15 Gew.-% eingesetzt werden.

12. Verwendung von Reaktivplastisole nach einem der vorstehenden Ansprüchen als Unterbodenschutz, als Foßbodenbelag, als Textilbeschichtungsmittel, als Punktschweißpaste oder als Beschichtungsmittel für flexible Substanzen.

13. Reaktivplastisole nach Anspruch 9, **dadurch gekennzeichnet, daß** als Verbindung der Formel I 2-Cyclohexyliden-4-methacryloyloxymethyl-1,3-dioxolan oder Dicyclopentadienyloxyethylmethacrylat verwendet wird.
